# EUROPEAN PATENT APPLICATION

(11) **EP 1 153 646 A1**
(43) Date of publication of application: **14.11.2001**
(21) Application number: 01850084.3
(22) Date of filing: 09.05.2001
(51) Int. Cl.: B01D 53/86, B01J 19/00, F01P 11/14

(54) **Motor vehicle comprising a radiator with a catalytic coating in a motor vehicle**

(30) Priority: 10.05.2000 SE 0001766
(71) Applicant: VOLVO CAR CORPORATION, 405 08 Göteborg (SE)
(72) Inventor: Älleving, Peter, 405 08 Göteborg (SV); Unger, Anders, 405 08 Göteborg (SV); Sköld, Jan, 405 08 Göteborg (SV); Petersson, Martin, 405 08 Göteborg (SV); Max, Erland, 405 08 Göteborg (SV)
(74) Representative: Hammond, Andrew David

(57) **Abstract**

Motor vehicle comprising an engine, a cooling circuit connected to the engine provided with a heat exchanging member which is at least partially externally coated with catalytic material for conversion of substances harmful to the environment in ambient air.

## Description

### Technical field

The present patent application relates to a motor vehicle in accordance with the preamble of claim 1. Particularly, the patent application relates to a motor vehicle comprising an engine, a cooling circuit connected to the engine provided with a heat exchanging member which at least partially is externally coated with catalytic material for conversion of substances harmful to the environment in ambient air, wherein the motor vehicle further comprises a control unit to which detecting means are connected for estimating and/or determining the degree of conversion of the heat exchanging member with the catalytic coating.

### Background of the invention

It is previously known with radiator assemblies for motor vehicles, where the radiator assembly is coated with catalytic material for conversion of substances harmful to the environment in ambient air when utilising the motor vehicle. The purpose of this catalytic coating is to utilise the vehicle for environmental improvement, since the vehicle thereby obtains an ability to clean ambient air. A prerequisite for enabling a catalytic coating to convert a substance is that the coating has assumed its working temperature. As a result of the radiator being heated by the cooling medium, a working temperature for the catalytic coating is provided without requiring any additional work from the engine, since the radiator is designed to emit excess heat. Furthermore, the radiator is positioned in order to provide an extensive heat exchange with the environment, something which is accomplished by means of placing the radiator in a way enabling a good through-flow of air. Since the air flow in some cases is insufficient, normally a fan provides the additional air flow which is sufficient for cooling the engine. This implies that large air quantities pass through the radiator, thereby enabling the catalytic coating to clean large quantities of air.

However, as a result of the exposed position of the radiator, it has been found that the catalytic function may degrade without a driver receiving any information about this. Neither will the driver realize that the function has degraded from the behaviour of the vehicle, since a loss of the catalytic function does not affect the performance of the vehicle otherwise.

### Summary of the invention

One object of the invention is to provide a vehicle where a driver or maintenance staff can be informed about the status of the catalytic function which is provided by means of the catalytic coating of a heat exchanger included in a cooling system connected to an engine. This object is achieved by means of a motor vehicle in accordance with the characterising portion of claim 1.

Preferred embodiments are listed in the dependent claims.

### Description of drawings

In the following, the invention will be described in greater detail with reference to attached drawings, in which
- Fig. 1: is a schematic illustration of a combustion engine according to a first embodiment of the invention,
- Fig. 2: is a schematic illustration of a combustion engine according to a second embodiment of the invention,
- Fig. 3: is a schematic illustration of a combustion engine according to a third embodiment of the invention, and
- Fig. 4: is a schematic illustration of a combustion engine according to a fourth embodiment of the invention.

### Description of embodiments

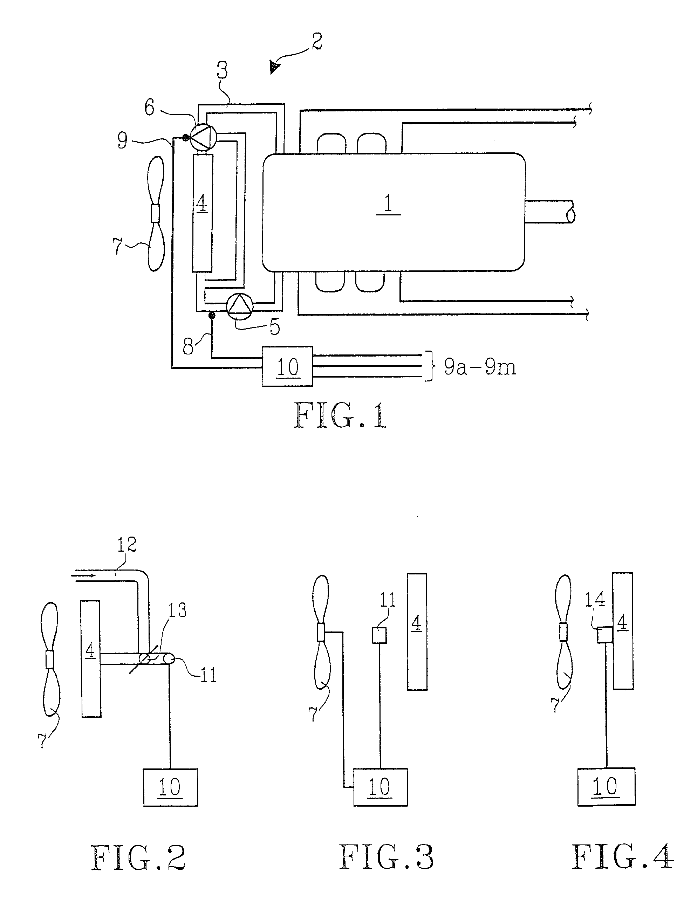

Fig. 1 shows an engine 1 for a motor vehicle. In a preferred embodiment of the invention, the engine is constituted of a conventional combustion engine. A cooling circuit 2 is fitted to the engine 1. The cooling circuit is of a conventional type and normally comprises cooling channels 3 connected to cooling channels (not shown) included in the engine 1, a heat exchanger 4 which is arranged for heat emission to the environment, a coolant pump 5 which is arranged to drive the coolant around inside the cooling circuit, and also a thermostat valve 6 which is arranged to open, and to shut the flow of the coolant through the heat exchanger and instead allow the coolant to by-pass the heat exchanger in a parallel channel.

In order to ensure that the air flow through the heat exchanger is sufficient also when the vehicle drives slowly or stands still, a fan 7 is arranged in connection with the heat exchanger. The fan can be driven in any way well known to the skilled person, i.e. by means of belt driving or chain driving from a power outlet coupled to the crankshaft or camshaft of the vehicle, or by means of an electric motor coupled to the fan.

In a preferred embodiment of the invention, the fan is arranged in order to be reversible. In this case, the fan preferably is driven by an electric motor, but it is also conceivable to arrange a gear between driving belt or chain and the fan wherein mechanical driving can be utilised.

The heat exchanging member is at least partially coated with a catalytic material. The catalytic material is designed to convert a substance harmful to the environment to one or several substances which is/are non-harmful to the environment. Examples of substances harmful to the environment are particles, ozone, carbon monoxide, nitrous oxide, VOC, HC, NMOG, NOx, SO2 and methane.

In a preferred embodiment, the catalytic material covers cooling flanges included in the heat exchanger, wherein the catalytic material is given a large surface which is exposed towards the environment.

In order to detect the degree of conversion of the heat exchanging member, detecting means 8, 9 are connected to control unit 10. In one embodiment of the invention, additional detecting means 9a - 9n are connected to the control unit 10. These detecting means 9a - 9n measure parameters related to the vehicle and the environment such as temperature, oxygen storage, flow, pressure, pressure drop, heat conduction, weight, conductivity, resistance, adhesion, fouling, chemical composition, galvanic potential, fluorescence, reflectance, absorbance. Subsequently, one or several of said parameters can be utilised when determining the concentration of the substances harmful to the environment which are converted.

In one embodiment of the invention, said detecting means 9, 9a - 9n are utilised in order to determine the concentration in the environment of the substances harmful to the environment which are converted by the catalytic material. In order to accomplish this, the determination is based on the sensors measuring the substance concentrations before passage through the radiator.

In an alternative embodiment of the invention, said set of detecting means or sensors comprises a pressure sensor which gives a first output signal dependent on static pressure downstream the heat exchanging unit and thereby on the air flow through the heat exchanger, wherein said control unit is arranged to estimate a degree of conversion based on said first output signal.

In still another alternative embodiment of the invention, said set of detecting means or sensors comprises a differential pressure sensor which gives a first output signal dependent on the pressure drop across the heat exchanging unit and thereby on the air flow through the heat exchanger, wherein said control unit is arranged to estimate a degree of conversion based on said first output signal.

In a further alternative embodiment of the invention, said set of detecting means or sensors comprises a flow sensor which gives a first output signal dependent on the air flow through the heat exchanger, wherein said control unit is arranged to estimate a degree of conversion based on said first output signal.

The control unit 10 is of a type known *per se,* and will therefore not be described in any greater detail. In one embodiment of the invention, the control unit can be constituted of a microprocessor included in the engine control system. It is also conceivable that the control unit 10 is constituted of a separate processor, which is able to communicate with other processors in the vehicle via a bus.

In a first embodiment of the invention, said detecting means 8, 9 are constituted of a first temperature sensor which is arranged to measure the temperature of the coolant. Since the catalytic material has to reach a predetermined temperature before conversion can take place, an initial approximation of the degree of conversion of the heat exchanging member with the catalytic coating can be performed by means of measuring if a so-called ignition temperature of the catalytic material has been reached.

In one embodiment of the invention, a method of performing said detection comprises to initially allow the engine temperature to stabilize at for example 90° C. Thereafter, the thermostat valve is opened completely, and the effect of the radiator is measured. The response constitutes a measure of the cooling effect of the radiator without any influence from the thermostat valve.

Furthermore, the efficiency of the radiator and thereby the degree of conversion can be estimated in an initial approximation by means of a simple surveillance of the temperature of the cooling system. In case the temperature rises too much, the capacity of the radiator has been reduced, and thereby also the degree of conversion has been reduced.

In a second embodiment of the invention, said detecting means 8, 9 further comprise a first and a second temperature sensor. In a further preferred embodiment, said first and second temperature sensors 8, 9 are mounted in the cooling circuit 2 with intermediate cooling channels in the heat exchanger 4, wherein said control unit 10 is arranged to estimate the heat emission of the heat exchanger 4 from the difference between estimated temperature of the first and of the second temperature sensor.

By means of measuring the temperature at two separate positions of the heat exchanger with intermediate cooling channels, it is possible to estimate the status of the heat exchanger and thereby to estimate the degree of conversion of the catalytic coating within the area. In case the heat exchanger has cooling channels which are blocked, as a result of channels being partially or entirely filled with air or being blocked in another way, or in case cooling channels have fallen off which is not uncommon in older vehicles, the efficiency of the radiator will be reduced. This means that the reduction of the coolant temperature during the passage through the radiator will become smaller. Since no conversion will take place in those areas where channels have been blocked, and the ignition temperature as a result of this is not reached, or in areas which have fallen off, the degree of conversion can be estimated from information on the temperature reduction of the coolant during the passage through the heat exchanger.

In a preferred embodiment of the invention, the first temperature sensor 8 is placed upstream the heat exchanger 4, and the second temperature sensor 9 is placed downstream the heat exchanger 4. In one embodiment of the invention, the first temperature sensor is constituted of a thermostat valve 6 present in the cooling circuit, which is arranged to open a passage via the heat exchanger when the coolant has reached its working temperature.

In an alternative embodiment of the invention, the temperature sensors can be placed directly inside the heat exchanger material, in direct connection with flanges included in the heat exchanger.

In an alternative embodiment of the invention, which is shown in Fig. 2, said detecting means are constituted of a first sensor 11 placed in connection with the heat exchanger. The sensor is constituted of any previously known detector for the substance harmful to the environment, which in a preferred embodiment consists of ozone. In order to estimate the degree of conversion of the catalytic coating, a value measured on treated air has to be compared with a value for untreated air. In a first embodiment of the invention, this value can be normative, i.e. only be constituted of a value stored in the control unit. In a second preferred embodiment of the invention, the comparison is constituted of a sensor which is subjected to treated air and a sensor which is subjected to untreated air. In a preferred embodiment of the invention, only a first sensor is utilised, wherein two alternative air routes are provided for reaching the sensor, partly a route with passage via the heat exchanger, and partly a route where passage does not take place. In order to accomplish this, according to one embodiment, the motor vehicle is provided with an air channel 12, which partly has channel which is arranged to direct air to the detecting means without passing the heat exchanger, and partly is arranged to direct air to the detecting means via passage through the heat exchanger. An air valve 13, enabling passage from the selected inlet, is arranged in said air channel. Subsequently, a comparison of the output signal from these two measurement points can be utilised in order to estimate the degree of conversion of the catalytic coating on the heat exchanger.

In an alternative embodiment of the invention which is shown in Fig. 3, instead of said air channel 12, the direction of rotation of the fan 7 can be varied. In this case, a sensor 11 can be utilised in order to measure the content of substance harmful to the environment in air which has passed the heat exchanger, and in air which has not passed the heat exchanger. Accordingly, the sensor can be mounted upstream or downstream the radiator, as counted in the normal travelling direction of the vehicle, wherein a first measurement is performed with the fan operating in the normal direction and a second with the fan operating in reversed direction. In order to enable reversing of the fan, the fan preferably is controlled by an electric motor, but it is also possible to drive the fan in a conventional way by means of belt or chain driving if a a gear is arranged between the drive shaft from the engine and the fan.

In a further embodiment of the invention, the air inlet of the combustion engine can be utilised instead of a fan in order to collect partly an air flow which has passed through the radiator, and partly one which has not passed through the radiator. In this case, two air channels are fitted to the air inlet of the combustion engine, partly a channel having its inlet downstream the radiator, and partly one having its inlet from an unaffected region. A sensor is mounted in the channel system which is driven by the air inlet of the combustion engine.

Since sensors, as a rule, are sensitive to the environment, the sensor preferably is mounted in a protected location, for example behind the radiator. In a preferred embodiment of the invention, the sensor is constituted of an ozone sensor.

In a further embodiment of the invention, the vehicle comprises means for generating the substance harmful to the environment, wherein said means are arranged to subject the heat exchanger to a predetermined concentration upstream the heat exchanger when determining the degree of conversion of the substance harmful to the environment, whereafter said detecting means are arranged to measure the concentration of the substance harmful to the environment downstream the heat exchanger.

In those embodiments where only one sensor or detecting means is utilised, preferably a predetermined level of the substance harmful to the environment is produced by said generating means. In case sensors are placed both upstream and downstream the heat exchanging member, in a preferred embodiment the concentration of the substance harmful to the environment is measured partly before passage through the heat exchanging member, and partly after passage through the heat exchanging member, wherein determination of the degree of conversion can take place by means of comparing the measured values upstream and downstream the heat exchanger.

In a preferred embodiment, said means for generating a substance harmful to the environment are constituted of an ozone generator, in which ozone is generated for example by means of discharges or by UV-light.

According to one embodiment of the invention, which is shown in Fig. 4, said set of detecting means or sensors 9, 9a - 9n comprises a test cell 14, coated with a catalytic coating, which is mounted on the heat exchanger or in a position which is equally exposed to the influence from the environment. Equally exposed means that a test cell placed in the equivalent position upon an average is degraded at the same rate as, or at a rate which exhibits a linear relationship to, a cell placed on the heat exchanger.

Accordingly, in one embodiment of the invention, said detecting means comprise a test cell coated with a catalytic coating exhibiting electrical or optical properties which change with wear and/or fouling, and where said control unit is arranged to estimate the degree of conversion of the heat exchanging member with the catalytic coating from an output signal generated by said test cell.

In a preferred embodiment, the optical properties of the test cell can change with loss of the catalytic material. This can be accomplished by means of applying the catalytic material onto a transparent carrier and placing a light detector in connection with said test cell. When losing catalytic material, the transparency increases which enables detection of the degree of conversion. The transparent carrier preferably is constituted of a plastic having an adhesiveness to catalytic material which is similar to aluminium.

In one embodiment utilising such a test cell, the electrical properties of the catalytic coating located on the test cell change with wear and/or fouling.

In a second embodiment utilising such a test cell, the test cell carries an additional conductive layer on top of the catalytic coating, wherein the electrical properties of the additional conductive layer change with wear and/or fouling.

In a third embodiment utilising such a test cell, the test cell carries an additional conductive layer on top of the catalytic coating, wherein the electrical properties of the additional conductive layer change with wear and/or fouling.

In a fourth embodiment utilising such a test cell, the test cell carries one or several wires, the electrical properties of which change with wear and/or fouling, wherein the wires are designed to change in relation to the degradation of the catalytic coating. In a preferred embodiment of the fourth embodiment utilising said test cell, the wires are designed in a way sensitive to corrosion and insulated so that the insulation falls off at the same rate as the catalytic coating degrades, wherein the wires corrode and their electrical properties change or the circuit is opened. In a further preferred embodiment, the wires are sensitive to corrosion and insulated so that the insulation falls of at the same rate as the catalytic coating degrades and their electrical properties are changed or the circuit is opened.

Furthermore, the test cell can be provided with means for heating the wires, wherein degradation of the catalytic material and thereby the degree of conversion is estimated by means of heating the wires with a current pulse after which the cooling course is studied by means of which the thermal conductivity of the surface is determined and thereby the correlating degradation of the catalytic coating.

As mentioned above, the test cell can be mounted on the heat exchanger or in an equally exposed position, alternatively constitute a portion of the surface of the heat exchanger.

In case a change of the optical properties of the test cell is utilised, according to one embodiment, said test cell comprises a photocell mounted beneath a transparent carrier coated with a catalytic coating, wherein said test cell is arranged to generate an output signal dependent on the optical absorbance or reflectance of the test cell and thereby correlating with the degradation of the catalytic coating. Furthermore, according to a further embodiment, said test cell can comprise a second photocell mounted beneath a second transparent carrier without any catalytic coating, wherein said test cell is arranged to generate a second output signal dependent on the difference in absorbance or reflectance between the two transparent carriers, and wherein said second output signal is utilised in order to determine the degradation of the catalytic coating.

In order to ensure that the measurement of reflectance and absorbance takes place with a well defined light intensity, in one embodiment of the invention, said detecting means comprise a light source illuminating the test cell when determining absorbance or reflectance, wherein a light intensity which is well-defined for the determination of absorbance or reflectance is obtained.

In a further embodiment of the invention utilising a test cell, the optical properties of which change with degradation of the catalytic material, said detecting means comprise a photocell mounted in such a way that it is hit by light emitted via fluorescence or phosphorescence from the catalytic coating, wherein a first output signal is created dependent on the optical absorbance or reflectance of the test cell and thereby correlating with the degradation of the catalytic coating. In order to ensure that emitted light remains within a controlled range, the test cell is provided with a light source illuminating the test cell with light which results in light being emitted from the test cell which is measured by the photocell.

In a preferred embodiment, said detecting means comprise a second photocell which is mounted in such a way that it is hit by light emitted from a surface which is not coated with fluorescent material, wherein a second output signal is generated and utilised as a reference for the first output signal from the surface which is coated with a catalytic coating having fluorescence, wherein the ratio or difference between the first and second photocell is utilised in order to determine the degradation of the catalytic coating.

In order to ensure that the test cell estimates maximum deviation from optimum degree of conversion, the test cell preferably is mounted in an exposed position, for example directly behind the fan.

The invention is not limited to the above-described embodiments, but may be varied within the scope of the following claims.

## Claims

1. A motor vehicle comprising an engine, a cooling circuit connected to the engine provided with a heat exchanging member which is at least partially externally coated with catalytic material for conversion of substances harmful to the environment in ambient air,
**characterised in that** the motor vehicle further comprises a control unit to which detecting means are connected for estimating and/or determining the degree of conversion, of a substance harmful to the environment, of the heat exchanging member with the catalytic coating.

2. A motor vehicle according to claim 1,
**characterised in that** said control unit is arranged to detect the concentration of said substances harmful to the environment before and/or after conversion.

3. A motor vehicle according to claim 1,
**characterised in that** said detecting means measure the concentration of a substance, which substance correlates with the concentration of the substance harmful to the environment, wherein the degree of conversion of the substance harmful to the environment is estimated and/or determined.

4. A motor vehicle according to claim 1,
**characterised in that** said detecting means comprise a first temperature sensor which gives a first output signal dependent on the temperature of the coolant and thereby of the catalytic coating, wherein said control unit is arranged to estimate a degree of conversion based on said first output signal.

5. A motor vehicle according to claim 4,
**characterised in that** a second temperature sensor is connected to said cooling circuit, and that said first and second temperature sensors are mounted in the cooling circuit with intermediate cooling channels in the heat exchanger, wherein said control unit is arranged to estimate the heat emission of the heat exchanger from the difference between estimated temperature of the first and of the second temperature sensor.

6. A motor vehicle according to claim 5,
**characterised in that** the control unit is arranged to estimate the degree of conversion based on the difference between estimated temperature of the first and of the second temperature sensor.

7. A motor vehicle according to any one of claims 5 or 6,
**characterised in that** the first and the second temperature sensor are placed upstream and downstream the heat exchanger.

8. A motor vehicle according to any one of claims 5 - 7,
**characterised in that** the first temperature sensor comprises a thermostat valve present in the cooling circuit which is arranged to open and close the flow of the cooling circuit through the heat exchanger.

9. A motor vehicle according to any one of claims 5 - 8,
**characterised in that** the second temperature sensor is mounted on the heat exchanger material in connection with cooling flanges included in the heat exchanger.

10. A motor vehicle according to any one of the preceding claims,
**characterised in that** said detecting means comprise a first sensor which is arranged to measure the content of the substance harmful to the environment downstream the heat exchanging member.

11. A motor vehicle according to claim 10,
**characterised in that** the motor vehicle further comprises means for deflecting the air flow passing said heat exchanger, wherein said first sensor is arranged to be exposed partly to a first air flow which has passed the heat exchanger wherein a third output signal is generated, and partly to a second air flow which has not passed the heat exchanger wherein a fourth output signal is generated, at which said control unit is arranged to estimate the degree of conversion based on said third and fourth output signals.

12. A motor vehicle according to claim 11,
**characterised in that** said deflecting means comprise an air channel which directs air to by-pass the heat exchanger.

13. A motor vehicle according to claim 11,
**characterised in that** said deflecting means are constituted of means for reversing a fan, coupled in connection with the heat exchanger, wherein said reversing means allow said first sensor to be exposed partly to a first air flow which has passed the heat exchanger, and partly to a second air flow which has not passed the heat exchanger.

14. A motor vehicle according to claim 10,
**characterised in that** said detecting means comprise a second sensor which is arranged to measure the content of the substance harmful to the environment upstream the heat exchanging member, wherein said control unit is arranged to estimate the degree of conversion based on output signals from said first and second sensors.

15. A motor vehicle according to claim 14,
wherein said engine is constituted of a combustion engine having an air inlet,
**characterised in that** said second sensor is located in an air channel which via a valve is connected to said air inlet in way possible to close.

16. A motor vehicle according to claims 10 - 15,
where the motor vehicle further comprises means for generating a predetermined concentration of the substance harmful to the environment, wherein said means are arranged to expose the heat exchanger to a predetermined concentration upstream the heat exchanger when determining the degree of conversion of the substance harmful to the environment, whereafter said detecting means are arranged to measure the concentration of the substance harmful to the environment downstream the heat exchanger.

17. A motor vehicle according to claim I,
**characterised in that** said detecting means comprise a pressure sensor which gives a first output signal dependent on static pressure downstream the heat exchanging member and thereby on the air flow through the heat exchanger, wherein said control unit is arranged to estimate a degree of conversion based on said first output signal.

18. A motor vehicle according to claim 1,
**characterised in that** said detecting means comprise a differential pressure sensor which gives a first output signal dependent on the pressure drop across the heat exchanging unit and thereby on the air flow through the heat exchanger, wherein said control unit is arranged to estimate a degree of conversion based on said first output signal.

19. A motor vehicle according to claim 1,
**characterised in that** said detecting means comprise a flow sensor which gives a first output signal dependent on the air flow through the heat exchanger, wherein said control unit is arranged to estimate a degree of conversion based on said first output signal.

20. A motor vehicle according to claim 1,
**characterised in that** said detecting means comprise a test cell coated with a catalytic coating exhibiting electrical or optical properties which change with wear and/or fouling and where said control unit is arranged to estimate the degree of conversion of the heat exchanging member with the catalytic coating from an output signal generated by said test cell.

21. A motor vehicle according to claim 20,
**characterised in that** the test cell comprises one or several wires, the electrical properties of which change in relation to the degradation of the catalytic coating.

22. A motor vehicle according to claim 21,
**characterised in that** the wires are sensitive to corrosion and insulated, and that the insulation falls off at the same rate as the catalytic coating degrades, wherein the wires corrode and their electrical properties change or the circuit is opened.

23. A motor vehicle according to claim 21 or 22,
**characterised in that** the test cell comprises means for heating the wires, wherein degradation of the catalytic material and thereby the degree of conversion is estimated by means of heating the wires with a current pulse after which the cooling course is studied by means of which the thermal conductivity of the surface is determined and thereby the correlating degradation of the catalytic coating.

24. A motor vehicle according to claim 20,
**characterised in that** said test cell comprises a photocell mounted beneath a transparent carrier coated with a catalytic coating, wherein said test cell is arranged to generate an output signal dependent on the optical absorbance or reflectance of the test cell and thereby correlating with the degradation of the catalytic coating.

25. A motor vehicle according to claim 24,
**characterised in that** said test cell comprises a second photocell mounted beneath a second transparent carrier without catalytic coating, wherein said test cell is arranged to generate a second output signal dependent on the difference in absorbance or reflectance between the two transparent carriers, wherein said second output signal is utilised in order to determine the degradation of the catalytic coating.

26. A motor vehicle according to claim 24 or 25,
**characterised in that** said detecting means comprise a light source illuminating the test cell when determining absorbance or reflectance, wherein a light intensity which is well-defined for the determination of absorbance or reflectance is obtained.

27. A motor vehicle according to claim 20,
**characterised in that** said detecting means comprise a photocell mounted in such a way that it is hit by light emitted via fluorescence or phosphorescence from the catalytic coating, wherein a first output signal is created dependent on the optical absorbance or reflectance of the test cell and thereby correlating with the degradation of the catalytic coating.

28. A motor vehicle according to claim 27,
**characterised in that** said detecting means comprise a light source illuminating the test cell, wherein emitted light from the catalytic coating is generated.

29. A motor vehicle according to claim 27 or 28,
**characterised in that** said detecting means comprise a second photocell which is mounted in such a way that it is hit by light emitted from a surface which is not coated with fluorescent material, wherein a second output signal is generated which is utilised as a reference for the first output signal from the surface which is coated with a catalytic coating having fluorescence, wherein the ratio or difference between the first and second photocell is utilised in order to determine the degradation of the catalytic coating.
